# EUROPEAN PATENT SPECIFICATION

(11) **EP 0 770 186 B1**
(45) Date of publication and mention of the grant of the patent: **30.09.1998**
(21) Application number: 95923507.8
(22) Date of filing: 06.07.1995
(51) Int. Cl.: F16B 37/08, B62D 43/10

(54) **A FASTENING DEVICE**
BEFESTIGUNGSVORRICHTUNG
DISPOSITIF DE FIXATION

(30) Priority: 12.07.1994 GB 9414014
(43) Date of publication of application: 02.05.1997
(73) Proprietor: DZUS FASTENER EUROPE LIMITED, Farnham, Surrey GU9 9PL (GB)
(72) Inventor: WRIGHT, Andrew, Charles, Walden, Farnham Surrey GU9 8PU (GB)
(74) Representative: Haley, Stephen
(86) International application number: GB9501590
(87) International publication number: WO9601955

(56) References cited:
- US-A- 5 100 275
- US-A- 5 139 381

## Description

The present invention relates to a fastening device.

A number of problems arise when fastening the spare wheel of a vehicle into its storage position, usually in the boot (trunk) of a vehicle. It is advantageous to have a fixing mechanism which is simple to operate and allows the wheel to be quickly and easily detached. At the same time, however, the mechanism must provide sufficient fastening strength to prevent it from working loose due to the vibrations and shocks received during normal operation of the vehicle. In addition, as the thickness of the hub of the spare wheel can vary according to wheel type, it is preferable to provide a mechanism which provides adequate clamping load substantially independent of wheel hub thickness. A slide-fit nut for rapid push-on mounting to a seated position on a threaded bolt is known from US-A-5 139 381.

According to the present invention, there is provided a fastening device comprising a stud, a cup-shape housing slidable on the stud and having a screw thread; a nut slidable on the stud and having a screw thread for engagement with the housing screw thread; a sprag selectively engageable with locking means on the stud; and, biasing means for biasing the sprag into engagement with the stud locking means; the arrangement being such that rotation of the nut relative to the housing in one direction causes the sprag to become disengaged from the stud locking means, allowing the housing to slide along the stud, and rotation of the nut relative to the housing in the other direction allows the sprag to be biased into engagement with the stud locking means substantially to prevent axial movement of the nut along the stud.

At least one of the nut and the housing should be restrained against rotation in use. This can be done by hand, for example by holding the housing with one hand whilst rotating the nut with the other hand. Alternatively, and preferably for convenience to the user, the housing is splined to the stud to prevent rotation of the housing relative to the stud.

Two or more sprags may be used.

The nut may have a slot which is angled downwards towards a bottom wall of the housing towards the centre of the nut, the sprag sliding in the slot. A cam surface on the sprag may engage with a cam surface on the nut as the nut is rotated into the housing to drive the sprag out of engagement with the stud locking means. The cam surface on the nut may be provided by a wall of the angled slot.

The sprag may be integral with the nut and may flex in order to provide the selective engagement and disengagement with the stud locking means.

An example of the present invention will now be described with reference to the accompanying drawings, in which:
Fig. 1 is a cross-sectional view from one side of the fastener of the present invention in an unlocked state;

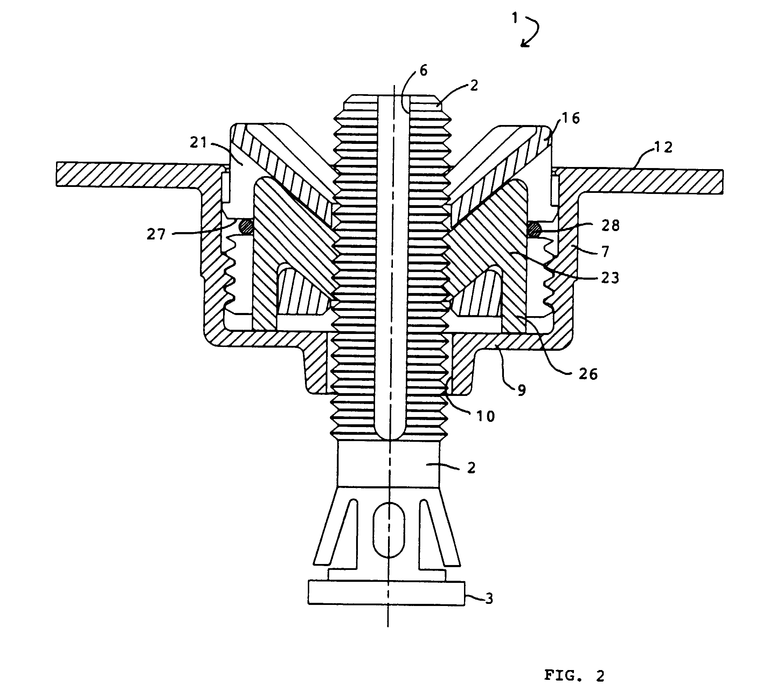

Fig. 2 is a partial cross-sectional view of the fastener of Figure 1 in a locked configuration viewed from the side at right angles to the view of Figure 1; and,

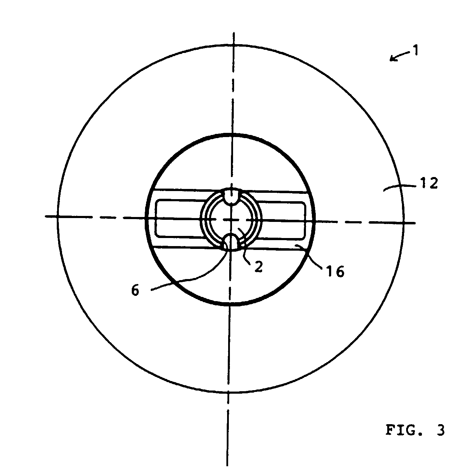

Fig. 3 is a view from above of the fastener.

A fastener 1, which is particularly useful for fixing the spare wheel (not shown) of a vehicle into the vehicle boot (trunk), has a stud 2. The stud 2 is fixed at its lower end 3 onto a vehicle at a position where the spare wheel is stored, for example in the floor of the boot of the vehicle. The stud 2 has serrations 4 along the majority of its length, the serrations 4 extending to the free end 5 opposite the lower end 3. The stud 2 has a pair of diametrically opposite grooves or recesses 6 which extend along the serrated portion of the length of the stud 2.

A cup-shaped housing 7 has a cylindrical side wall 8 and a bottom wall 9. The bottom wall 9 has a through-hole 10. The through-hole 10 is shaped and sized so that the housing 7 is a sliding fit on the stud 2, the bottom wall 9 of the housing 7 being formed with splines 11 which engage with the recesses 6 in the stud 2. The splined engagement of the housing 7 with the stud 2 prevents rotation of the housing 7 relative to the stud 2.

The housing 7 has an outwardly extending flange 12 which is parallel to and spaced from the bottom wall 9. Adjacent the open mouth 13 of the housing 7 is a lip 14 which protrudes into the interior of the housing 7. The housing 7 is provided internally with a left-handed screw thread 15 in the lower portion of the side wall 8 towards the bottom wall 9.

A nut 16 has a through-hole 17 which allows the nut 16 to be a sliding fit on the stud 2. The nut 16 has a left-handed external screw thread 18 which is engageable with the screw thread 15 in the housing 7. The nut 16 has wings 19 at its upper end which enable the nut 16 to be rotated more easily by the user. The nut 16 has an external wedge-shaped bead 20. As the nut 16 is pushed into the housing 7, the wedge-shaped bead 20 snaps over the lip 14 in the housing 7 to retain the nut 16 within the housing 7.

The nut 16 has two diametrically opposed slots 21 which lie in a plane in which the longitudinal axis of the stud 2 lies. The slots 21 are angled downwards towards the centre of the nut 16, the edges of the slots 21 providing correspondingly angled opposed cam surfaces 22.

Two sprags 23 are provided, one for each angled slot 21. Each sprag 23 is generally planar and broadly V-shaped, the angle of the "V" corresponding to that of the angle of the slots 21. One arm 24 of each sprag 23 is sized to be a sliding fit between the respective opposed cam surfaces 22 of one of the slots 21 and has serrations 25 at its free end adjacent the stud 2. The serrations 25 on the sprags 23 correspond to the serrations 4 on the stud 2. The other arm 26 of each sprag 23 is in the form of a dependent leg which extends towards and can contact the bottom wall 9 of the housing 7.

The nut 16 has an annular groove 27 which, in the example shown, is positioned just below the bead 20. An O-ring or annular spring 28 is fitted into this recess 27 and bears against the sprags 23 to urge the sprags 23 inwards towards the stud 2.

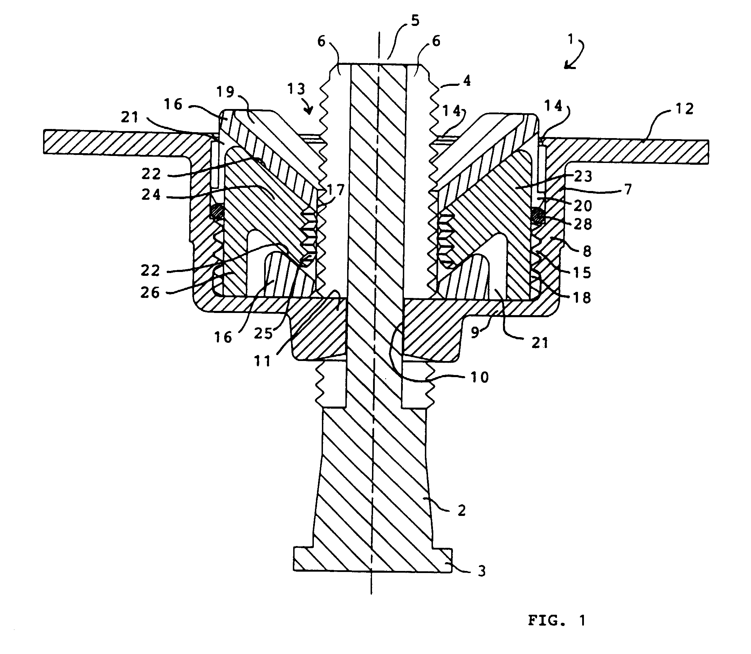

In operation, the nut 16 is screwed (in an anti-clockwise direction) into the housing 7. This causes the legs 26 of the sprags 23 to engage with the bottom wall 9 of the housing 7. As the nut 16 is screwed further into the housing 7, the sprags 23 are driven radially outwards against the action of the annular spring 28 by engagement with the cam surfaces 22 of the nut 16. This releases the engagement of the sprag serrations 25 from the stud serrations 4 which, in turn, allows the assembly of the housing 7, nut 16 and sprags 23 to be slid axially up and down the plug 2. In particular, in this unlocked configuration as shown in Figure 1, the assembly can be removed from the stud 2 and a wheel placed over the stud 2 and the assembly then slid back onto the stud 2 and pressed downwards against the central hub of the wheel (not shown). The nut 16 is then rotated in a "normal" clockwise direction which, by virtue of the left-handed screw threads 15,18 on the housing 7 and nut 16, causes the bottom wall 9 of the housing 8 to be driven downwards away from the nut 16. This allows the sprags 23 to be biased inwards by the annular spring 28 so that the sprag serrations 25 engage with the stud serrations 4; this engagement between the sprags 23 and the stud 2 locks the nut 16 against axial movement along the stud 2. Further rotation of the nut 16 accordingly drives the housing 7 downwards to clamp the wheel between the flange 12 on the housing 7 and the floor or other surface of the vehicle boot to which the stud 2 is fixed. The clamping load thus applied produces sufficient friction between the components to prevent the nut 16 rotating relative to the housing 7.

It will be appreciated that the nut 16 can be locked at any position along the serrated portion of the stud 2, enabling a large range of wheel sizes to be accommodated.

To release the fastener 1, the nut 16 is simply rotated in an anti-clockwise direction which brings the housing 7 upwards so that legs 26 of the sprags 23 engage the bottom wall 9 of the housing 7 which, as described above, causes the sprags 23 to be driven outwards allowing the assembly of the housing 7, nut 16 and sprags 23 to be slid off of the stud 2.

As shown, the angle of the serrations 4 on the stud 2 and the angle of the corresponding serrations 25 of the sprag 23 are the same as the angle of the slots 21 in the nut 16. This is preferable, though different angles between the serrations 4, 25 and the slot 21 may be used.

All parts in the fastener may be made of plastics. Other materials such as metal may be used and, for the annular spring 28, a rubber O-ring may be used, for example.

The sprags 23 are shown as separate items in the specific example described above. As an alternative, the sprags 23 may be integrally moulded to the nut 16 and allowed to flex when engaged with the bottom wall 9 of the housing 7 in order to disengage the sprags 23 from the stud 2.

## Claims

1. A fastening device (1), the fastening device (1) comprising a stud (2), a cup-shape housing (7) slidable on the stud (2) and having a screw thread (15); a nut (16) slidable on the stud (2) and having a screw thread (18) for engagement with the housing screw thread (15); a sprag (23) selectively engageable with locking means (4) on the stud (2); and, biasing means (28) for biasing the sprag (23) into engagement with the stud locking means (4); the arrangement being such that rotation of the nut (16) relative to the housing (7) in one direction causes the sprag (23) to become disengaged from the stud locking means (4), allowing the housing (7) to slide along the stud (2), and rotation of the nut (16) relative to the housing (7) in the other direction allows the sprag (23) to be biased into engagement with the stud locking means (4) substantially to prevent axial movement of the nut (16) along the stud (2).

2. A fastening device according to claim 1, wherein at least one of the nut (16) and the housing (7) is restrained against rotation.

3. A fastening device according to claim 1 or claim 2, wherein the housing (7) is splined to the stud (2) to prevent rotation of the housing (7) relative to the stud (2).

4. A fastening device according to any of claims 1 to 3, wherein the nut (16) has a slot (21) which is angled downwards towards a bottom wall (9) of the housing (7) towards the centre of the nut (16), the sprag (23) sliding in the slot (21).

5. A fastening device according to any of claims 1 to 4, wherein a cam surface on the sprag (23) engages with a cam surface (22) on the nut (16) as the nut (16) is rotated into the housing (7) to drive the sprag (23) out of engagement with the stud locking means (4).

6. A fastening device according to claim 5 when dependent on claim 4, wherein the cam surface (22) on the nut (16) is provided by a wall of the angled slot (21).

7. A fastening device according to any of claims 1 to 6, wherein the sprag (23) is integral with the nut (16) and is flexible in order to provide the selective engagement and disengagement with the stud locking means (4).

8. A fastening device according to any of claims 1 to 7, wherein the biasing means is an annular spring (28).

9. A fastening device according to any of claims 1 to 8, comprising at least two sprags (23).

## Patentansprüche

1. Befestigungsvorrichtung (1) mit einem Ansatz (2), einem becherförmigen Gehäuse (7), das auf dem Ansatz (2) verschiebbar ist und ein Schraubengewinde (15) hat, einer Mutter (16), die auf dem Ansatz (2) verschiebbar ist und ein Schraubengewinde (18) zum Eingriff mit dem Gehäuse-Schraubengewinde (15) hat, einem Hemmelement (23), das wahlweise mit Verschlußmitteln (4) an dem Ansatz (2) in Eingriff bringbar ist, und Vorspannmitteln (28) zum Vorspannen des Hemmelementes (23) für den Eingriff mit den Ansatz-Verschlußmitteln (4), wobei die Anordnung derart ist, daß eine Drehung der Mutter (16) relativ zu dem Gehäuse (7) in einer Richtung bewirkt, daß das Hemmelement (23) aus dem Eingriff mit den Ansatz-Verschlußmitteln (4) gelöst wird, was es dem Gehäuse (7) gestattet, sich entlang dem Ansatz (2) zu verschieben, und daß eine Drehung der Mutter (16) relativ zu dem Gehäuse (7) in der anderen Richtung es dem Hemmelement (23) gestattet, für den Eingriff mit den Ansatz-Verschlußmitteln (4) vorgespannt zu werden, im wesentlichen um eine axiale Bewegung der Mutter (16) entlang des Ansatzes (2) zu vermeiden.

2. Befestigungsvorrichtung nach Anspruch 1, bei der entweder die Mutter (16) oder das Gehäuse (7) an einer Drehung gehindert wird.

3. Befestigungsvorrichtung nach Anspruch 1 oder Anspruch 2, bei der das Gehäuse (7) mit dem Ansatz (2) verkeilt ist, um eine Drehung des Gehäuses (7) relativ zu dem Ansatz (2) zu vermeiden.

4. Befestigungsvorrichtung nach einem der Ansprüche 1 bis 3, bei der die Mutter (16) einen Schlitz (21) hat, der nach unten in Richtung auf eine Bodenwand (9) des Gehäuses (7) und in Richtung auf die Mitte der Mutter (16) abgewinkelt ist, wobei das Hemmelement (23) in dem Schlitz (21) verschiebbar ist.

5. Befestigungsvorrichtung nach einem der Ansprüche 1 bis 4, bei der eine Angriffsfläche auf dem Hemmelement (23) mit einer Angriffsfläche (22) auf der Mutter (16) zur Anlage kommt, wenn die Mutter (16) in das Gehäuse (7) eingedreht wird, um das Hemmelement (23) aus dem Eingriff mit den Ansatz-Verschlußmitteln (4) zu bringen.

6. Befestigungsvorrichtung nach Anspruch 5, soweit abhängig von Anspruch 4, bei der die Angriffsfläche (22) auf der Mutter (16) von einer Wand des abgewinkelten Schlitzes (21) gebildet wird.

7. Befestigungsvorrichtung nach einem der Ansprüche 1 bis 6, bei der das Hemmelement (23) mit der Mutter (16) einstückig ist und flexibel ist, um den wahlweisen Eingriff und Nicht-Eingriff mit den Ansatz-Verschlußmitteln (4) zu bewirken.

8. Befestigungsvorrichtung nach einem der Ansprüche 1 bis 7, bei der die Vorspannmittel eine ringförmige Feder (28) sind.

9. Befestigungsvorrichtung nach einem der Ansprüche 1 bis 8, die mindestens zwei Hemmelemente (23) umfaßt.

## Revendications

1. Dispositif de fixation (1), le dispositif de fixation (1) comportant un goujon (2), un logement (7) en forme de cuvette pouvant coulisser sur le goujon (2) et doté d'un filet (15) ; un écrou (16) pouvant coulisser sur le goujon (2) et doté d'un filet (18) d'engagement sur le filet (15) du logement; un organe de coincement (23) pouvant s'engager de manière sélective sur un moyen de verrouillage (4) prévu sur le goujon (2); et un moyen de sollicitation (28) pour amener l'organe de coincement (23) à s'engager sur le moyen de verrouillage (4) du goujon; l'agencement étant tel qu'une rotation de l'écrou (16) dans une direction par rapport au logement (7) entraîne le désengagement de l'organe de coincement (23) par rapport au moyen de verrouillage (4) du goujon, ce qui permet au logement (7) de glisser le long du goujon (2), et qu'une rotation de l'écrou (16) dans l'autre direction par rapport au logement (7) permet d'amener l'organe de coincement (23) à s'engager sur le moyen de verrouillage (4) du goujon, essentiellement pour empêcher un déplacement axial de l'écrou (16) le long du goujon (2).

2. Dispositif de fixation selon la revendication 1, dans lequel au moins l'un parmi l'écrou (16) et le logement (7) est empêché de pivoter.

3. Dispositif de fixation selon la revendication 1 ou la revendication 2, dans lequel le logement (7) est assemble par cannelure au goujon (2) pour empêcher le pivotement du logement (7) par rapport au goujon (2).

4. Dispositif de fixation selon l'une quelconque des revendications 1 à 3, dans lequel l'écrou (16) est doté d'une fente (21) oblique descendant vers une paroi de fond (9) du logement (7) en direction du centre de l'écrou (16), l'organe de coincement (23) coulissant dans la fente (21).

5. Dispositif de fixation selon l'une quelconque des revendications 1 à 4, dans lequel une surface de came prévue sur l'organe de coincement (23) s'engage sur une surface de came (22) prévue sur l'écrou (16) lorsque l'on fait pivoter l'écrou (16) dans le logement (7) pour désengager l'organe de coincement (23) par rapport au moyen de verrouillage (4) du goujon.

6. Dispositif de fixation selon la revendication 5 dans la mesure où elle dépend de la revendication 4, dans lequel la surface de came (22) prévue sur l'écrou (16) est constituée par une paroi de la fente oblique (21).

7. Dispositif de fixation selon l'une quelconque des revendications 1 à 6, dans lequel l'organe de coincement (23) est intégré à l'écrou (16) et est flexible, de manière à permettre l'engagement et le désengagement sélectif sur le moyen de verrouillage (4) du goujon.

8. Dispositif de fixation selon l'une quelconque des revendications 1 à 7, dans lequel le moyen de sollicitation est un ressort annulaire (28).

9. Dispositif de fixation selon l'une quelconque des revendications 1 à 8, comportant au moins deux organes de coincement (23).
